# EUROPEAN PATENT SPECIFICATION

(11) **EP 4 462 645 B1**
(45) Date of publication and mention of the grant of the patent: **25.03.2026**
(21) Application number: 24733835.3
(22) Date of filing: 15.03.2024
(51) Int. Cl.: H02K 1/18, H02K 1/14

(54) **ELECTRIC MOTOR**
ELEKTROMOTOR
MOTEUR ÉLECTRIQUE

(30) Priority: 27.03.2023 JP 2023050462
(43) Date of publication of application: 13.11.2024
(73) Proprietor: DAIKIN INDUSTRIES, LTD., Osaka-shi, Osaka 530-0001 (JP)
(72) Inventor: NAKA, Shojiro, Osaka-shi Osaka 5300001 (JP); HIRANO, Masaki, Osaka-shi Osaka 5300001 (JP); HIBINO, Hiroshi, Osaka-shi Osaka 5300001 (JP)
(74) Representative: Goddar, Heinz J.
(86) International application number: PCT/JP2024/010350
(87) International publication number: WO 2024/203481

(56) References cited:
- DE-A1- 102016 220 823
- JP-A- 2000 224 787
- JP-A- 2002 101 579
- JP-A- 2009 254 012
- JP-A- 2015 089 230
- JP-A- 2018 085 853
- US-A1- 2011 254 390
- US-A1- 2020 336 025
- US-A1- 2022 045 560

## Description

### TECHNICAL FIELD

The present disclosure relates to an electric motor.

### BACKGROUND ART

Electric motors are used in various fields such as an air conditioner. Since the electric motor can be a vibration source, study has been conducted on a technique for reducing vibration. For example, Patent Document 1 discloses a motor stator blank having a yoke portion, in which several axial grooves are provided along a circumferential direction in the yoke portion and are empty or filled with a damping medium. It is described that this configuration weakens excitation of a stator core caused by vibration generated on the stator and reduces, e.g., vibration.

### CITATION LIST

### PATENT DOCUMENT

Patent Document 1: Japanese Unexamined Patent Publication No. 2021-065082 DE102016220823A1 and JP2002101579A disclose relevant electric motors.

### SUMMARY OF THE INVENTION

### TECHNICAL PROBLEM

In the technique of Patent Document 1, the groove shape is substantially triangular and long in the radial direction, and as a result, a magnetic path contributing to the rotational torque of the motor decreases.

It is an object of the electric motor of the present disclosure to reduce vibration propagating from a motor stator to a casing housing the motor stator while suppressing a decrease in a magnetic path contributing to the rotational torque of the motor.

### SOLUTION TO THE PROBLEM

The invention is directed to an electric motor (30). The electric motor (30) includes a rotor (40) rotatable about a rotary shaft and a stator core (32) disposed outside the rotor (40) and including a plurality of core members (37) stacked in an axial direction. The core members (37) each include: an annular inner yoke portion (41), a tooth portion (35) extending inward in a radial direction from the inner yoke portion (41), an annular outer yoke portion (43) disposed outside the inner yoke portion (41) in the radial direction, a plurality of beam portions (42) extending in a circumferential direction between the inner yoke portion (41) and the outer yoke portion (43), an inner joint portion (44) joining the inner yoke portion (41) and the beam portions (42) in the radial direction, and an outer joint portion (45) joining the outer yoke portion (43) and the beam portions (42) in the radial direction. The electric motor (30) includes at least one fixing portion (51a to 59b) fixing the core members (37) to each other. Each of the plurality of beam portions (42) has a shape narrower than that of the inner yoke portion (41).

In the invention, it is possible to reduce propagation of vibration between the inner yoke portion (41) and the outer yoke portion (43) and reduce deformation of the core members (37), particularly the outer yoke portion (43), the beam portions (42), etc., in the axial direction of the rotary shaft.

### BRIEF DESCRIPTION OF THE DRAWINGS

FIG. 1 is a schematic configuration diagram of a refrigeration apparatus according to an embodiment.
FIG. 2 is a longitudinal sectional view of a compressor of the embodiment taken along a section parallel with an axial direction.
FIG. 3 is a transverse cross-sectional view of an electric motor of the embodiment taken along a section perpendicular to the axial direction.
FIG. 4 is a transverse cross-sectional view for describing a stator core of the electric motor according to the embodiment.
FIG. 5 is an enlarged view of a portion V of FIG. 4 for describing arrangement of fixing portions.
FIG. 6 is a transverse cross-sectional view for describing the stator core of the electric motor according to the embodiment.
FIG. 7 is a transverse cross-sectional view for describing the stator core of the electric motor according to the embodiment.
FIG. 8 is a transverse cross-sectional view for describing the stator core of the electric motor according to the embodiment.
FIG. 9 is a transverse cross-sectional view for describing the stator core of the electric motor according to the embodiment.
FIG. 10 is a transverse cross-sectional view for describing the stator core of the electric motor according to the embodiment.
FIG. 11 is a transverse cross-sectional view for describing the stator core of the electric motor according to the embodiment.
FIG. 12 is a transverse cross-sectional view for describing the stator core of the electric motor according to the embodiment.
FIG. 13 is a transverse cross-sectional view for describing the stator core of the electric motor according to the embodiment.
FIG. 14 is a transverse cross-sectional view for describing the stator core of the electric motor according to the embodiment.
FIG. 15 is a transverse cross-sectional view for describing the stator core of the electric motor according to the embodiment.

### DESCRIPTION OF EMBODIMENTS

Embodiments of the present disclosure will be described in detail below with reference to the drawings. The present disclosure is not limited to the embodiments shown below, and various changes can be made within the scope without departing from the scope of the claims. Since each of the drawings is intended to illustrate the present disclosure conceptually, dimensions, ratios, or numbers may be exaggerated or simplified as necessary for ease of understanding.

A compressor (10) of the present disclosure is provided for a refrigeration apparatus (1).

### (1) Overview of Refrigeration Apparatus

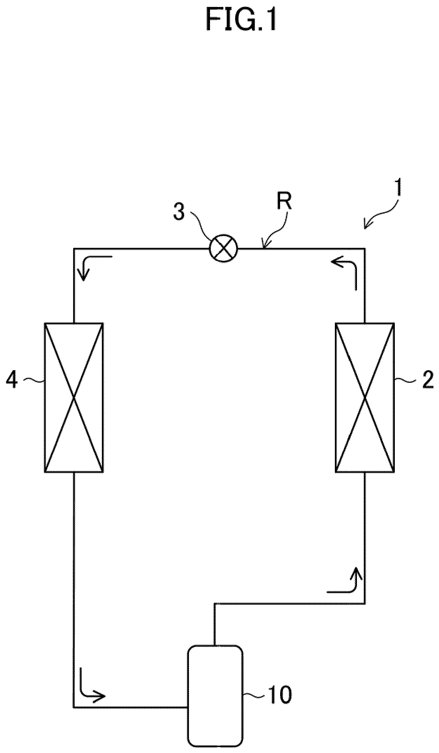

The refrigeration apparatus (1) illustrated in FIG. 1 includes the compressor (10) of the present disclosure. The refrigeration apparatus (1) includes a refrigerant circuit (R) filled with refrigerant. The refrigerant circuit (R) has the compressor (10), a radiator (2), a decompression mechanism (3), and an evaporator (4). The decompression mechanism (3) is an expansion valve. The refrigerant circuit (R) performs a vapor compression refrigeration cycle.

In the refrigeration cycle, the refrigerant compressed by the compressor (10) dissipates heat to air in the radiator (2). The refrigerant having dissipated heat is decompressed by the decompression mechanism (3) and is evaporated in the evaporator (4). The evaporated refrigerant is sucked into the compressor (10).

The refrigeration apparatus (1) is an air conditioner. The air conditioner may be a cooling-only apparatus, a heating-only apparatus, or an air conditioner switchable between cooling and heating. In the case of switching between cooling and heating, the air conditioner has a switching mechanism (e.g., four-way switching valve) that switches the direction of circulation of the refrigerant. The refrigeration apparatus (1) may be a water heater, a chiller unit, or a cooling apparatus that cools air in an internal space. The cooling apparatus cools air in an internal space of, e.g., a refrigerator, a freezer, or a container. The expansion mechanism is an electronic expansion valve, a temperature-sensitive expansion valve, an expander, or a capillary tube.

### (2) Compressor

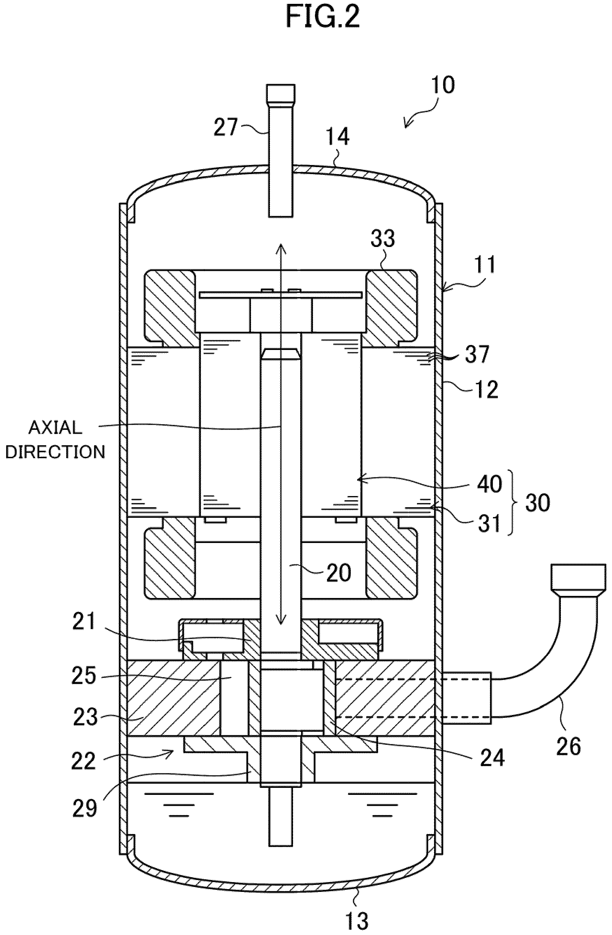

As illustrated in FIG. 2, the compressor (10) has a casing (11), an electric motor (30), a rotary shaft (20), and a compression mechanism (22). The compressor (10) is a rotary compressor. Precisely, the compressor (10) is a compressor of an oscillating piston type. The compressor (10) may be a scroll compressor, a screw compressor, or a turbo compressor.

### (2-1) Casing

The casing (11) houses the electric motor (30), the rotary shaft (20), and the compression mechanism (22). The casing (11) is a hermetic container. The inside of the casing (11) is filled with high-pressure refrigerant discharged from the compression mechanism (22).

The casing (11) is made of a metal material. The casing (11) has a barrel (12), a bottom portion (13), and a top portion (14). The barrel (12) is a tubular metal member. At each of both ends of the barrel (12) in the axial direction, an opening is formed. In this example, the axial direction of the barrel (12) corresponds to the vertical direction. The bottom portion (13) closes the lower opening of the barrel (12). The top portion (14) closes the upper opening of the barrel (12).

### (2-2) Electric Motor

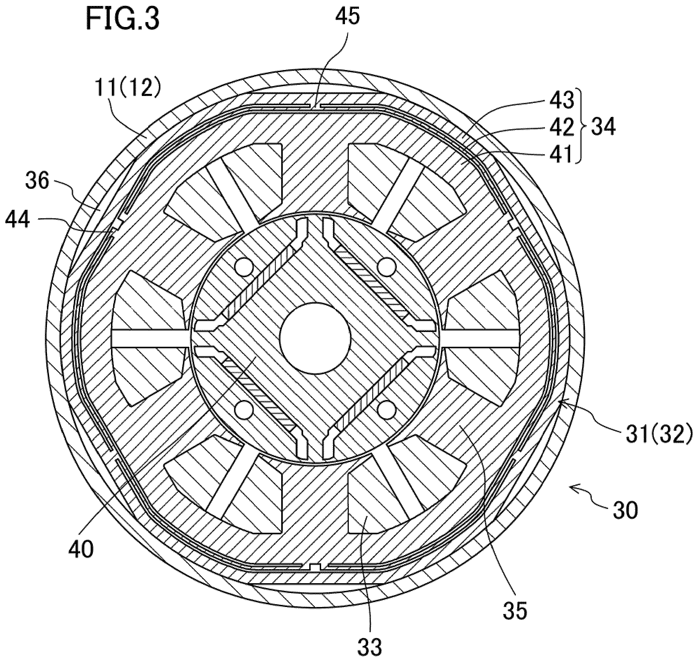

The electric motor (30) illustrated in FIGS. 2 and 3 is an example of a rotating electric machine. The electric motor (30) is disposed above the compression mechanism (22). The operation frequency of the electric motor (30) is controlled by an inverter device. In other words, the compressor (10) is an inverter compressor having a variable operation frequency.

The electric motor (30) has a stator (31) and a rotor (40). The stator (31) is supported by the barrel (12) of the casing (11). The stator (31) has a stator core (32) and a coil (33) wound around the stator core (32). The stator core (32) forms a core of the present disclosure. The stator core (32) includes core members (37), such as electrical steel sheets, stacked in the axial direction. As illustrated in FIG. 3, the stator core (32) has an annular yoke portion (34) and a plurality of (six in this example) tooth portions (35) extending inward in the radial direction from the inner peripheral surface of the yoke portion (34). The yoke portion (34) includes a plurality of portions, and details of the stator core (32) including this point will be described later. The stator core (32) may be an integral core or a split core. The integral core is a core which is not divided in a direction perpendicular to the axial direction, and the split core is a core which is divided in a direction perpendicular to the axial direction.

The outer peripheral surface of the yoke portion (34) has a plurality of (six in this example) core cuts (36). The core cuts (36) are grooves extending in the axial direction of the stator core (32). Each core cut (36) is formed at a position on the opposite side of the yoke portion (34) from the tooth portion (35).

The rotor (40) is disposed inside the stator core (32). The rotary shaft (20) is fixed in the axial center of the rotor (40). A plurality of permanent magnets (not shown) is embedded in the rotor (40).

An annular gap is formed between the tooth portions (35) of the stator (31) and the rotor (40) in a transverse cross-sectional view.

### (2-3) Rotary Shaft

The rotary shaft (20) extends vertically along the axial center of the casing (11). The rotary shaft (20) is rotationally driven by the electric motor (30). The rotary shaft (20) is rotatably supported by a bearing (21).

### (2-4) Compression Mechanism

The compression mechanism (22) has a cylinder (23) and a piston (24) provided inside the cylinder (23). A cylinder chamber (25) is formed between the inner peripheral surface of the cylinder (23) and the outer peripheral surface of the piston (24). In the cylinder chamber (25), the refrigerant is compressed by the piston (24) driven by the rotary shaft (20).

### (2-5) Suction Pipe and Discharge Pipe

The compressor (10) has a suction pipe (26) and a discharge pipe (27). The suction pipe (26) penetrates the barrel (12) in the radial direction, and communicates with the cylinder chamber (25). Low-pressure refrigerant in the refrigerant circuit (R) is sucked into the cylinder chamber (25) through the suction pipe (26). The discharge pipe (27) penetrates the top portion (14) in the axial direction, and communicates with the internal space of the casing (11). The refrigerant compressed in the compression mechanism (22) flows through, e.g., the core cuts (36) and gap of the electric motor (30), and is then sent to the refrigerant circuit (R) through the discharge pipe (27).

### (3) Details of Stator Core

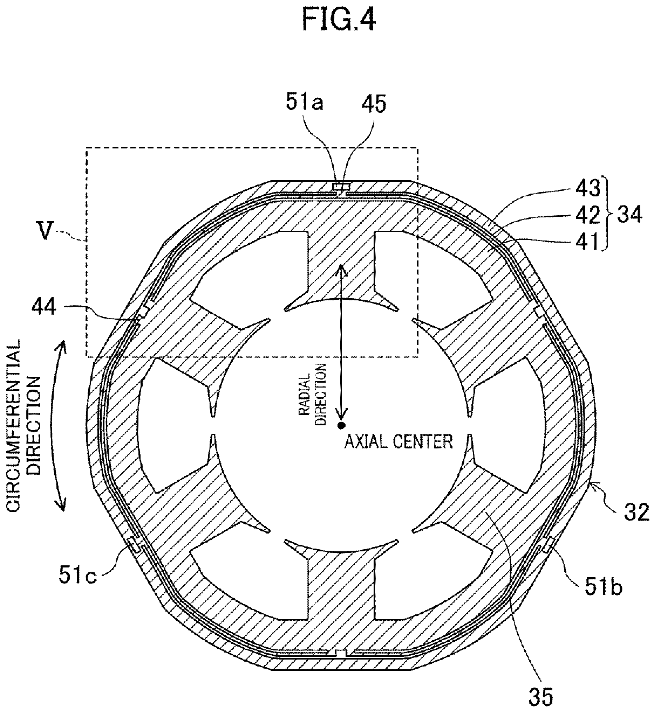

The details of the stator core (32) will be described with reference to FIGS. 2 to 5. In the following description, the terms "axial direction," "circumferential direction," and "radial direction" mean the axial direction, circumferential direction, and radial direction of the stator (31), respectively (see FIG. 4), unless otherwise specified. In this example, the axial direction of the stator (31) corresponds to the axial direction of the rotary shaft (20) as illustrated in FIG. 2.

The stator core (32) is configured such that the plurality of plate-shaped core members (37) is stacked from one end to the other end in the axial direction. The core member (37) is made of a soft magnetic material, and for example, an electrical steel sheet, an amorphous alloy, a nanocrystalline material, or a powder magnetic core can be used.

As illustrated in FIG. 3, the stator core (32) is supported by the casing (11), and the rotor (40) is disposed inside the stator core (32). The coil (33) is wound around the tooth portions (35).

The yoke portion (34) of the stator core (32) includes an annular inner yoke portion (41), an annular outer yoke portion (43) disposed outside the inner yoke portion (41) in the radial direction, and a plurality of beam portions (42) extending in the circumferential direction between the inner yoke portion (41) and the outer yoke portion (43). The inner yoke portion (41) and the beam portions (42) are joined to each other in the radial direction by inner joint portions (44). The outer yoke portion (43) and the beam portions (42) are joined to each other in the radial direction by outer joint portion (45). In this manner, the inner yoke portion (41) and the outer yoke portion (43) are integrated by the beam portions (42) as coupling portions interposed therebetween.

In the example of FIG. 3, three beam portions (42) of the same length are provided. Each beam portion (42) is joined to the inner yoke portion (41) at both ends by the inner joint portion (44) and joined to the outer joint portion (45) at the center. The inner joint portions (44) and the outer joint portions (45) are alternately arranged at positions corresponding to the six tooth portions (35). In this manner, the three beam portions (42) are provided rotationally symmetrically with respect to the axial center. At other portions, each beam portion (42) is not joined to the inner yoke portion (41) or the outer yoke portion (43).

The number and length of the beam portions (42) and the arrangement of the inner joint portions (44) and the outer joint portions (45) are not limited to those illustrated in FIG. 3, and various configurations may be employed. For example, the beam portion (42) may be joined to the outer yoke portion (43) at both ends and joined to the inner yoke portion (41) at the center. The number of beam portions (42) may be two, or four or more.

The outer yoke portion (43) of the stator core (32) described above is fixed to the casing (11) by, e.g., shrink fitting or press fitting. Thus, stress is applied from the casing (11) to the yoke portion (34). However, such stress is applied to the outer yoke portion (43), and is not applied to the inner yoke portion (41) joined to the outer yoke portion (43) by the beam portions (42). Thus, degradation of magnetic properties in the inner yoke portion (41) and the tooth portions (35) due to the stress is reduced, and an increase in an iron loss due to the degradation of the magnetic properties is suppressed.

According to the stator core (32) described above, the outer yoke portion (43) and the inner yoke portion (41) are joined to each other by the beam portions (42), and therefore, it is possible to reduce propagation of vibration generated on the inner yoke portion (41) side to the outer yoke portion (43) side. As a result, vibration of the casing (11) and therefore vibration of the compressor (10) can be reduced. Further, the structure of this embodiment including the beam portions (42) can also reduce stress (drop impact stress) generated in the axial direction on the stator core (32) when the compressor (10) drops and collides with, e.g., a floor surface.

All the core members (37) forming the stator core (32) may have the above-described configuration. This provides a significant effect of reducing the vibration and the stress. However, this configuration is not essential, and the effect of reducing the vibration and the stress can be provided as long as some of the core members (37) have the above-described configuration.

Meanwhile, the structure in which the outer yoke portion (43) and the inner yoke portion (41) are joined to each other by the beam portions (42) is easily deformable. In particular, the beam portion (42) and the outer yoke portion (43), which have narrow shapes, are easily deformable in the axial direction (the stacking direction of the core members (37)) by external force. The external force is, for example, force applied in the stacking direction of the core members (37) when the coil (33) is wound or stress applied when the stator core (32) is shrink-fitted into the casing (11).

For this reason, at least one fixing portion for fixing the core members (37) to each other is provided. A first configuration example is illustrated in FIG. 4.

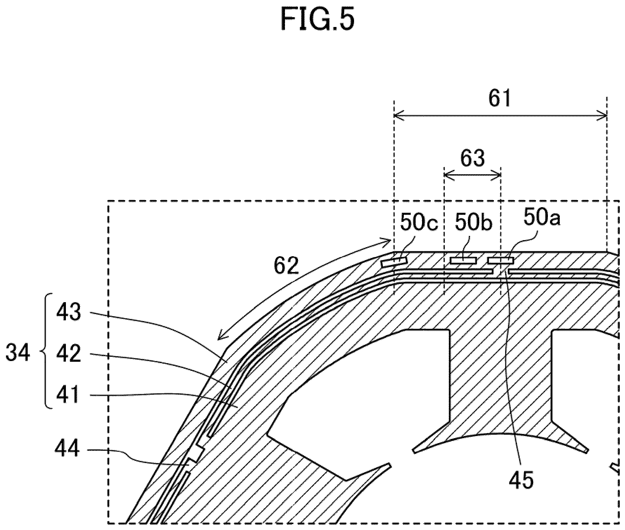

FIG. 4 is a view of the stator core (32) as in FIG. 3. In this drawing, the casing (11), the rotor (40), and the coil (33) are omitted, and only the stator core (32) is illustrated. Further, FIG. 5 illustrates a portion V in FIG. 4.

As illustrated in FIG. 4, fixing portions (51a, 51b, 51c) (hereinafter, may be collectively referred to as fixing portions (51)) are arranged in portions of the outer yoke portion (43) outside the three outer joint portions (45). The fixing portions (51) fix the stacked core members (37) to each other. Such fixing may be performed by, for example, swaging or bonding, or may be performed by fastening with a rivet or a bolt.

The fixing portions (51) may fix all or some of the stacked core members (37). If at least one pair of core members (37) adjacent to each other is fixed to each other, deformation is reduced at such a portion.

The stacked core members (37) easily deformable in the vicinity of both ends in the stacking direction. It is thus effective for reducing the deformation to fix the core members (37) in the vicinity of both ends in the stacking direction by the fixing portions (51). Fixing all the stacked core members (37) is most effective in terms of reduction in the deformation.

The fixing portion can be disposed at various portions, and FIG. 5 further illustrates the case where the fixing portion is disposed in the vicinity of the outer joint portion (45) in the outer yoke portion (43).

The outer yoke portion (43) includes an arc portion (62) in contact with the casing (11) when the outer yoke portion (43) is supported by the casing (11) (FIG. 3) and a core cut portion (61) corresponding to the core cut (36) (FIG. 3) formed by cutting the outer periphery of the outer yoke portion (43) so as not to contact the casing (11). In the example of FIGS. 4 and 5, the core cut portion (61) is in a linear shape and is positioned between the arc portions (62). The outer periphery of each arc portion (62) forms a portion of a circle (circle corresponding to the inner periphery of the casing (11)), and the core cut portion (61) has an outer shape obtained by cutting out part of the circle. The core cut portion (61) is not limited to the linear shape.

When the external force is applied to the outer yoke portion (43), the external force is transmitted to the beam portions (42) through the outer joint portions (45). It is thus effective for reducing the deformation of the beam portion (42) to provide the fixing portion (51) in the vicinity of the outer joint portion (45). From this point of view, in the example of FIGS. 4 and 5 in which the outer joint portion (45) is positioned at the center of the core cut portion (61), the fixing portion (51) is preferably provided in the core cut portion (61). More preferably, the fixing portion (51) is provided at a position close to the outer joint portion (45), for example, in a half area (63) extending from the center to the end of the core cut portion (61). A position (50b) indicates this example. Further, a position (50a) outside the outer joint portion (45) is more preferred. In this case, the outer joint portion (45) is interposed between the fixing portion (51) and the axial center (FIG. 4). Since the outer joint portion (45) is interposed, the position (50a) has an advantage that the area of the core member (37) for providing the fixing portion (51) is easily ensured.

Here, if part of the fixing portion (51) is included in a predetermined area, it is assumed that the fixing portion (51) is formed in such an area.

Further, the fixing portion (51) is preferably provided at a position (50c) at a boundary between the core cut portion (61) and the arc portion (62). Since the arc portion (62) is in contact with the casing (11), the external force is highly likely to be transmitted from the arc portion (62) to the core cut portion (61). It is thus effective for reducing the deformation of the core cut portion (61) to provide the fixing portion (51) at the position (50c). As will be described later, it is also advantageous to provide the fixing portion (51) in the arc portion (62).

### (Other Examples of Arrangement of Fixing Portions)

Another example of the arrangement of the fixing portions (51) will be described below in comparison with the first configuration example of FIG. 4.

### (Second Configuration Example)

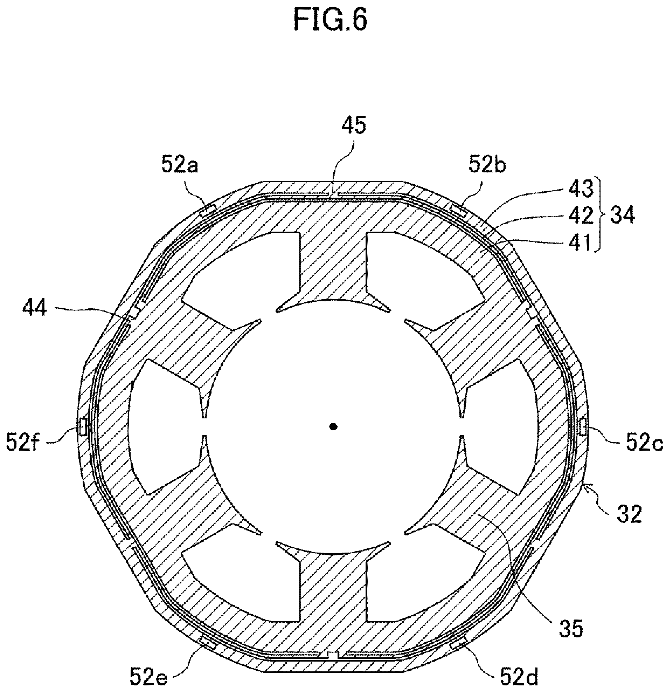

FIG. 6 illustrates a second configuration example. Here, fixing portions (52a, 52b, 52c, 52d, 52e, 52f) (hereinafter, may be collectively referred to as fixing portions (52)) are arranged in six arc portions (62) of the outer yoke portion (43). The arc portion (62) is in contact with the casing (11) when the stator core (32) is supported by the casing (11). Thus, the external force is likely to be applied to the arc portion (62) of the outer yoke portion (43). Thus, it is effective for reducing the deformation of the outer yoke portion (43) (core member (37)) to arrange the fixing portions (52) in the arc portions (62). The fixing portions (52) are not necessarily arranged in all the arc portions (62). For example, in FIG. 6, only three fixing portions (52a, 52c, 52e) may be provided.

### (Third Configuration Example)

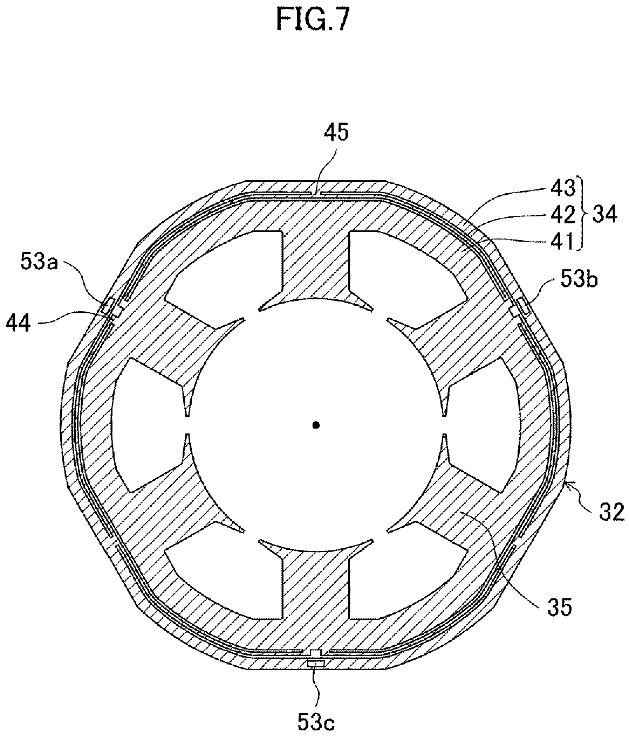

FIG. 7 illustrates a third configuration example. Here, fixing portions (53a, 53b, 53c) (hereinafter, may be collectively referred to as fixing portions (53)) are provided in portions of the outer yoke portion (43) outside the inner joint portions (44). In the example of FIG. 6, the number of inner joint portions (44) is three, and therefore, the number of fixing portions (53) is also three. This configuration can also reduce the deformation of the core member (37), particularly the outer yoke portion (43), due to the external force.

### (Fourth Configuration Example)

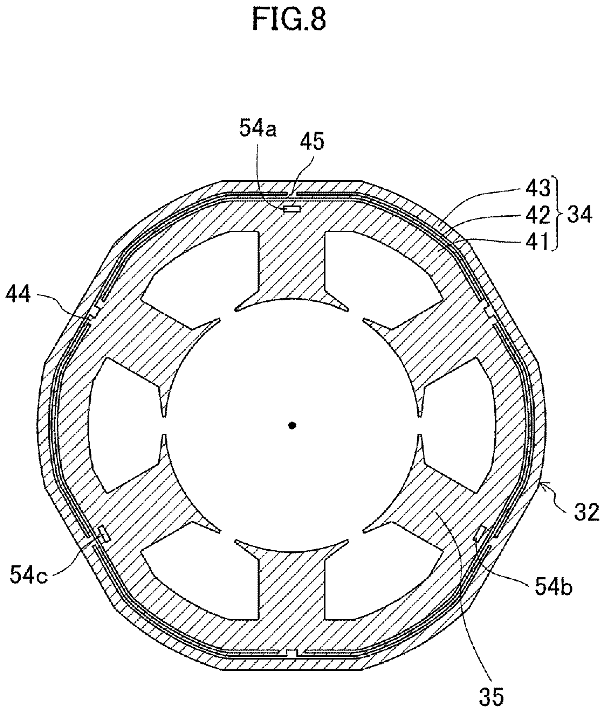

FIG. 8 illustrates a fourth configuration example. Here, fixing portions (54a, 54b, 54c) (hereinafter, may be collectively referred to as fixing portions (54)) are provided in the inner yoke portion (41) instead of the outer yoke portion (43). Thus, the inner yoke portions (41) are fixed to each other. More specifically, the fixing portions (54a, 54b, 54c) are provided in portions of the inner yoke portion (41) inside three outer joint portions (45). It is also assumed that the fixing portions (54) are provided in portions of the inner yoke portion (41) formed with the tooth portions (35). It is not essential to form the outer joint portion (45) in the portion corresponding to the tooth portion (35), and therefore, the positions of the outer joint portion (45), the tooth portion (35), and the fixing portion (54) are not coincide with each other in some cases.

The fixing portions (54) are arranged in the inner yoke portion (41) so that the deformation of the core member (37), particularly the inner yoke portion (41), can be reduced.

Further, the fixing portions (54) are provided at such positions so that blocking of the flow of magnetic flux by the fixing portion (54) can be reduced. That is, if, e.g., swaging is performed on the core members (37) for fixing the core members (37), the flow of magnetic flux may be blocked, which influences the performance of the electric motor. In contrast, the fixing portions (54) are arranged in the portions corresponding to the tooth portions (35) as in FIG. 8, which can reduce the above-described influence.

### (Fifth Configuration Example)

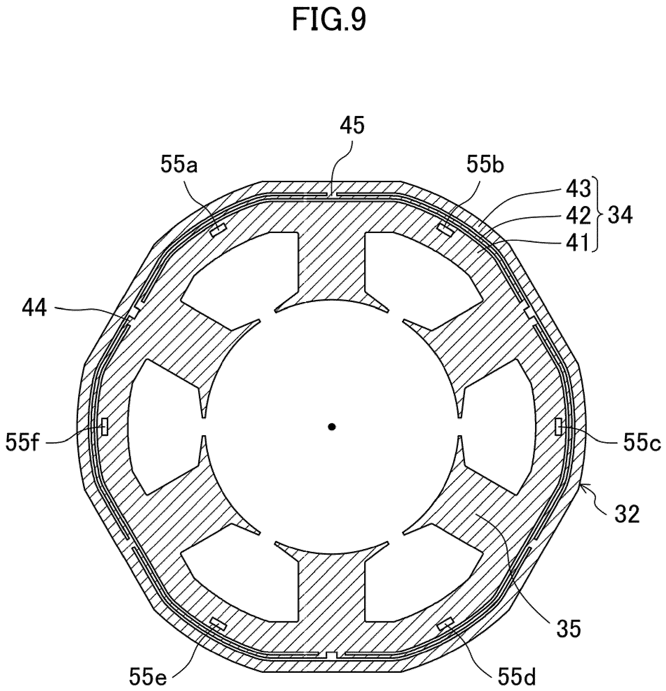

FIG. 9 illustrates a fifth configuration example. Here, fixing portions (55a, 55b, 55c, 55d, 55e, 55f) (hereinafter, may be collectively referred to as fixing portions (55)) are arranged in the inner yoke portion (41). The fixing portions (55) are each provided in six arc portions (62) of the inner yoke portion (41).

With such a configuration, it is also possible to reduce the deformation of the core member (37), particularly the inner yoke portion (41), due to the external force.

### (Sixth Configuration Example)

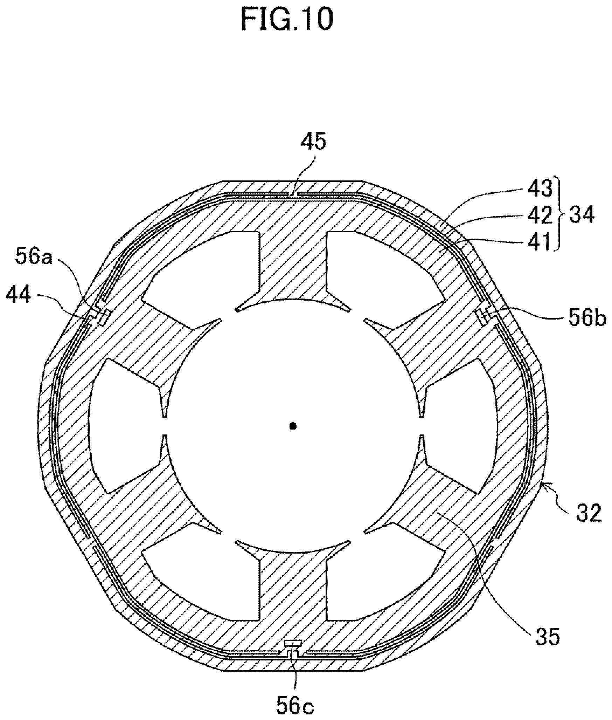

FIG. 10 illustrates a sixth configuration example. Here, fixing portions (56a, 56b, 56c) (hereinafter, may be collectively referred to as fixing portions (56)) are provided in portions of the inner yoke portion (41) inside three inner joint portions (44). In this case, the fixing portion (56) is interposed between the inner joint portion (44) and the axial center.

It is effective for reducing the deformation of the inner yoke portion (41) due to force transmitted from the beam portions (42) to arrange the fixing portions (56) in the vicinity of the inner joint portions (44). The inner joint portion (44) is provided in the portion corresponding to the tooth portion (35), and as a result, the fixing portion (56) is also provided in the portion position corresponding to the tooth portion (35). Thus, blocking of the flow of magnetic flux by the fixing portion (56) can also be reduced.

### (Seventh Configuration Example)

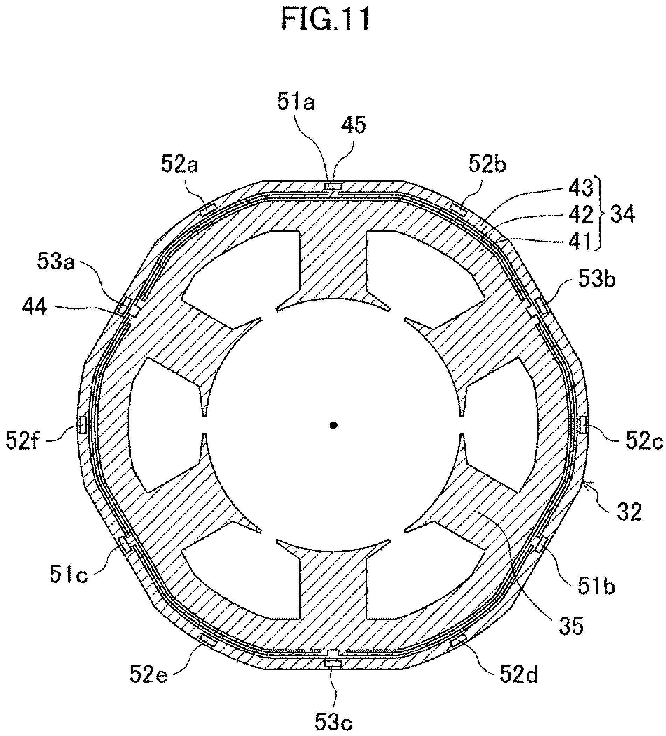

FIG. 11 illustrates a seventh configuration example. This example is a combination of all the first, second, and third configuration examples, in which fixing portions are provided in the outer yoke portion (43). That is, the outer yoke portion (43) is provided with three fixing portions (51a, 51b, 51c) at positions corresponding to the outer joint portions (45), six fixing portions (52a, 52b, 52c, 52d, 52e, 52f) at positions corresponding to the arc portions (62), and three fixing portions (53a, 53b, 53c) at positions corresponding to the inner joint portions (44). The fixing portions are provided as described above so that the effect of reducing the deformation of the core member (37) forming the stator core (32) can be more reliably provided. However, since the processing requires a large number of steps and a high cost, the structure is preferably designed considering a desired effect.

For example, the fixing portions (51) of the first configuration example and the fixing portions (52) of the second configuration example may be provided. Similarly, the fixing portions (52) and the fixing portions (53) may be combined, or the fixing portions (51) and the fixing portions (53) may be combined.

Two or three of the fixing portions (54, 55, 56) provided in the inner yoke portion (41) may be combined.

### (Eighth Configuration Example)

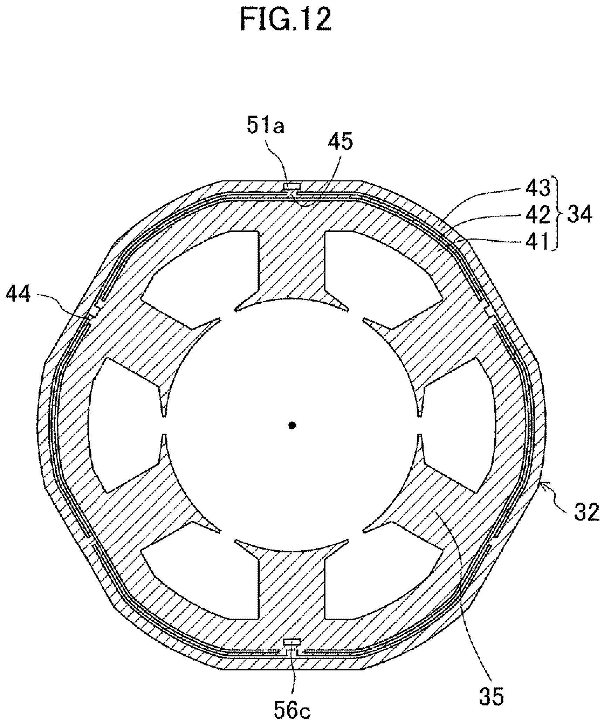

FIG. 12 illustrates an eighth configuration example. In this example, both the outer yoke portion (43) and the inner yoke portion (41) are provided with fixing portions. That is, the outer yoke portion (43) is provided with one fixing portion (51a) positioned outside the outer joint portion (45) as in the first configuration example, and the inner yoke portion (41) is provided with one fixing portion (53c) positioned inside the inner yoke portion (41) as in the sixth configuration example. Although each of the inner yoke portion (41) and the outer joint portion (45) has one fixing portion in the illustrated example, three fixing portions may be provided as in the first and sixth configuration examples.

### (Ninth Configuration Example)

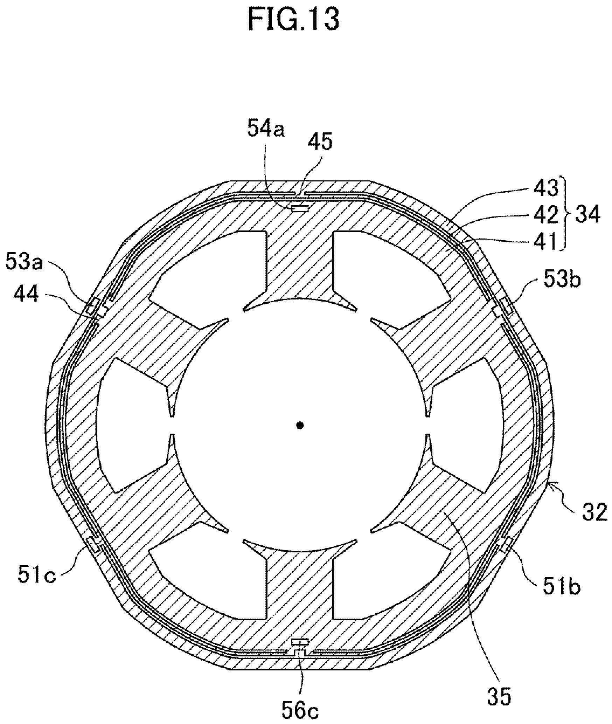

FIG. 13 illustrates a ninth configuration example. Here, the outer joint portion (45) is provided with four fixing portions, and the inner yoke portion (41) is provided with two fixing portions. More specifically, the outer yoke portion (43) is provided with two fixing portions (51b, 51c) positioned outside the outer joint portions (45) as in the first configuration example, and is provided with two fixing portions (53a, 53b) positioned outside the inner joint portions (44) as in the third configuration example. The inner yoke portion (41) is provided with one fixing portion (54a) positioned inside the outer joint portion (45) as in the fourth configuration example, and is provided with one fixing portion (56c) positioned inside the inner joint portion (44) as in the sixth configuration example.

The external force is likely to be applied to the outer yoke portion (43) of the core member (37) forming the stator core (32). Thus, the outer yoke portion (43) is preferably provided with more fixing portions than those of the inner yoke portion (41). The ninth configuration example of FIG. 13 is one example.

For example, the fixing portions (51) of the first configuration example are provided in the portions corresponding to the outer joint portions (45), but are not necessarily provided for all the outer joint portions (45). As in FIG. 13, the fixing portions (51) may be provided only for some of the outer joint portions (45). The same also applies to the fixing portions of the second to sixth configuration examples, and in each example, the fixing portions may be provided only for some of the portions.

Table 1 further shows some examples of the arrangement of the fixing portions in the outer yoke portion (43) and the inner yoke portion (41). Signs such as 53c and 51b correspond to the reference numerals of the fixing portions illustrated in FIGS. 4 and 6 to 10. For example, for B, the outer yoke portion (43) is provided with the fixing portion (51b) in FIG. 4, and the inner yoke portion (41) is provided with the fixing portion (54a) in FIG. 8 and the fixing portion (56c) in FIG. 10.

**[Table 1]**

| | Outer Yoke Portion | Inner Yoke Portion |
|---|---|---|
| A | One Portion (53c) | One Portion (54a) |
| B | One Portion (51b) | Two Portions (54a/56c) |
| C | Two Portions (53a/51b) | Two Portions (54a/56c) |
| D | Three Portions (53a, 53b/51b) | Two Portions (54a/56c) |
| E | One Portion (53c) | Three Portions (54a, 54b, 54c) |
| F | Two Portions (53b/53c) | Three Portions (54a, 54b, 54c) |
| G | One Portion (53c) | Four Portions (54a, 54b, 54c/56a) |
| H | Two Portions (53b/53c) | Four Portions (54a, 54b, 54c/56a) |
| I | One Portion (53c) | Five Portions (54a, 54b, 54c/56a, 56b) |
| J | Four Portions (51a, 51b, 51c/53b) | Two Portions (56a, 56c) |

### (Tenth Configuration Example)

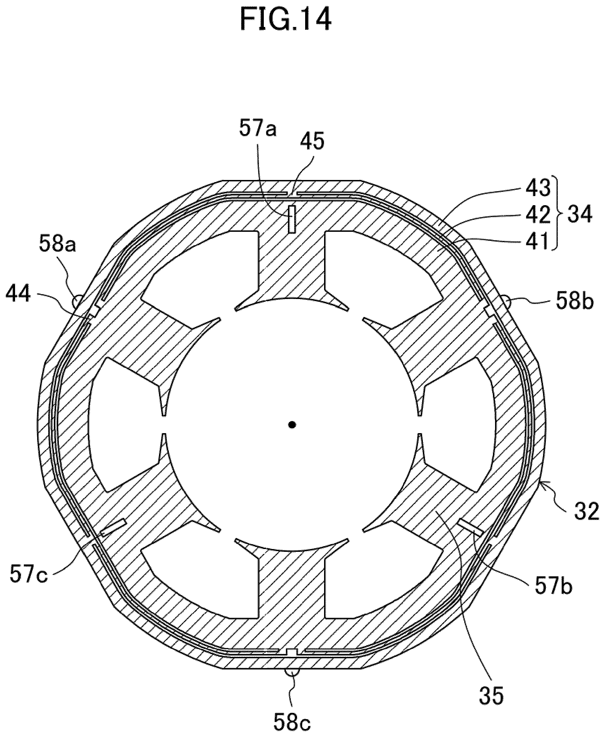

FIG. 14 illustrates a tenth configuration example. Here, fixing portions (57a, 57b, 57c) (hereinafter, may be collectively referred to as fixing portions (57)) are provided in portions of the inner yoke portion (41) inside the outer joint portions (45). That is, the arrangement is similar to that of the fixing portions (54) of the fourth configuration example illustrated in FIG. 8. Here, the fixing portion (54) is formed by swaging so as to have a shape elongated in the circumferential direction of the inner yoke portion (41). In contrast, the fixing portion (57) of the tenth configuration example is formed by swaging so as to have a shape elongated in the radial direction. In a case where the fixing portions (57) are provided in the inner yoke portion (41), particularly portions corresponding to the tooth portions (35), the fixing portion (57) may have the shape elongated in the radial direction.

As in the fixing portions (53) of the third configuration example illustrated in FIG. 7, fixing portions (58a, 58b, 58c) (hereinafter, may be collectively referred to as fixing portions (58)) are provided in portions of the outer yoke portion (43) outside the inner joint portions (44). The fixing portion (53) is formed by swaging, whereas the fixing portion (58) is formed by welding. The outer yoke portion (43) is fixed at the fixing portions (58) by welding from the outside.

The outer yoke portion (43) is preferably fixed by welding as described above. Here, if the arc portion (62) of the outer yoke portion (43) is welded from the outside, the arc outer shape of the arc portion (62) may uneven, which is inconvenient when the outer yoke portion (43) is supported by the casing (11). The fixing by welding is thus preferably performed on the core cut portion (61) corresponding to the core cut (36).

### (Eleventh Configuration Example)

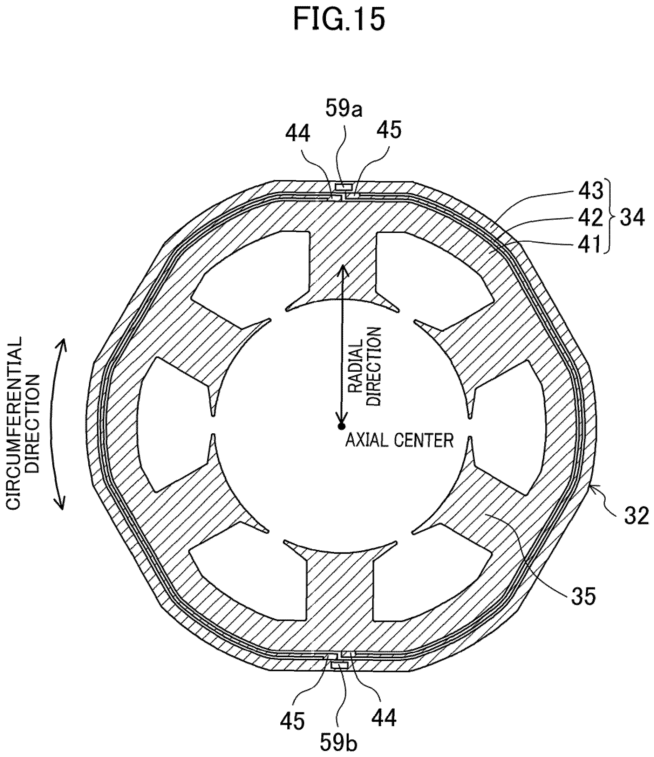

FIG. 15 illustrates an eleventh configuration example. Here, the beam portion (42) has a configuration different from those of the examples described above. In the eleventh configuration example of FIG. 15, two beam portions (42) of the same length are provided. Each beam portion (42) is joined to the outer yoke portion (43) at one end by the outer joint portion (45) and joined to the inner yoke portion (41) by the inner joint portion (44) at the other end. One beam portion (42) is joined to the outer yoke portion (43) on the upper side of FIG. 15, extends half a circumference, and is joined to the inner yoke portion (41) on the lower side of FIG. 15. Another beam portion (42) is joined to the outer yoke portion (43) on the lower side of FIG. 15, and is joined to the inner yoke portion (41) on the upper side.

Also in the stator core (32) having these beam portions (42), the fixing portions are provided so that the deformation of the core member (37) due to the external force can be reduced. In FIG. 15, as an example, the outer yoke portion (43) is provided with fixing portions (59a, 59b) in portions outside the inner joint portions (44) and the outer joint portions (45). Needless to say, it is also possible to provide fixing portions similar to those in the first to tenth configuration examples described above.

Three or more beam portions (42) may be provided, each of which is joined at both ends to the outer yoke portion (43) and the inner joint portion (44).

### (Other Configuration Examples)

It has been described above that the fixing portions are arranged in the outer yoke portion (43) and/or the inner yoke portion (41). A fixing portion may be disposed in the beam portion (42) (including the outer joint portion (45) and the inner joint portion (44) as part of the beam portion (42)) to fix the beam portions (42) to each other. In a case where the fixing portion is disposed in the beam portion (42), the deformation can be reduced when the stator core (32) is shrink-fitted into the casing (11). Since the beam portion (42) is not a magnetic path, there is an advantage that an increase in a loss due to the fixing portion formed can be suppressed. Similarly in a case where the fixing portion is disposed in the outer yoke portion (43), an increase in the loss of the magnetic path due to the fixing portion formed can be avoided.

Table 2 shows a fixing method at the fixing portion for the outer yoke portion (43), the inner yoke portion (41), and the beam portion (42).

The swaging and bonding mainly described above can be applied to any of the outer yoke portion (43), the inner yoke portion (41), and the beam portion (42). The swaging can be performed by a general swaging or press processing, and therefore, is preferred because, e.g., an additional member is not required.

The bonding is advantageous in that the loss of the magnetic path does not increase even when the bonding is applied to the inner yoke portion (41). Moreover, the bonding is advantageous in that the bonding can be performed regardless of the dimension of each portion and the entireties of the outer yoke portion (43) and the inner yoke portion (41) can be bonded, and as a result, fixing strength can be improved.

The inner yoke portion (41) can be fixed by molding with resin, which is advantageous in that the loss of the magnetic path in the inner yoke portion (41) does not increase. In the case of the swaging or bonding, a gap or an adhesive layer between the core members (37) is narrowed, and the amount of iron per core length (space factor) decreases. In contrast, in the case of the molding, since there is no gap or adhesive layer, the space factor can be increased. The molding can also be performed on the entireties of the outer yoke portion (43) and the inner yoke portion (41).

The welding is performed from the outside, and is applied to the outer yoke portion (43). The welding is advantageous in that the outer yoke portion (43) can be firmly fixed with no limitations due to the dimension of the stator core (32).

The fastening is a method of fixing the core members (37) to each other with, e.g., a bolt or a rivet. The fastening may include local fastening to only some of the stacked core members (37) and overall fastening through, e.g., end plates arranged at both ends of the core members (37). The fastening is advantageous in that the fastening can be performed with no limitations due to the dimension of the stator core (32).

**[Table 2]**

| | | Arrangement of Fixing Portions | | |
|---|---|---|---|---|
| | | Outer Yoke Portion | Inner Yoke Portion | Beam Portion |
| | Swaging | ○ | ○ | ○ |
| | Bonding | ○ | ○ | ○ |
| Fixing Method | Molding | × | ○ | × |
| | Welding | ○ | × | × |
| | Fastening (Local) | ○ | ○ | × |
| | Fastening (Overall) | ○ | ○ | × |

While the embodiments and various examples have been described above, it will be understood that various changes in form and details may be made without departing from the scope of the claims. The elements of the above-described embodiments may be appropriately combined or replaced.

### INDUSTRIAL APPLICABILITY

As can be seen from the foregoing description, the present disclosure is useful for an electric motor.

### DESCRIPTION OF REFERENCE CHARACTERS

1 Refrigeration Apparatus
10 Compressor
30 Electric Motor
32 Stator Core
35 Tooth Portion
37 Core Member
40 Rotor
41 Inner Yoke Portion
42 Beam Portion
43 Outer Yoke Portion
44 Inner Joint Portion
45 Outer Joint Portion
51a, 51b, 51c Fixing Portion
52a, 52b, 52c, 52d, 52e, 52f Fixing Portion
53a, 53b, 53c Fixing Portion
54a, 54b, 54c Fixing Portion
55a, 55b, 55c, 55d, 55e, 55f Fixing Portion
56a, 56b, 56c Fixing Portion
57a, 57b, 57c Fixing Portion
58a, 58b, 58c Fixing Portion
59a, 59bFixing Portion
61 Core Cut Portion
62 Arc Portion

## Claims

1. An electric motor (30) including a rotor (40) rotatable about a rotary shaft and a stator core (32) disposed outside the rotor (40) and including a plurality of core members (37) stacked in an axial direction,
the plurality of core members (37) each comprising: an annular inner yoke portion (41); a tooth portion (35) extending inward in a radial direction from the inner yoke portion (41); an annular outer yoke portion (43) disposed outside the inner yoke portion (41) in the radial direction; a plurality of beam portions (42) extending in a circumferential direction between the inner yoke portion (41) and the outer yoke portion (43); an inner joint portion (44) joining the inner yoke portion (41) and the plurality of beam portions (42) in the radial direction; and an outer joint portion (45) joining the outer yoke portion (43) and the plurality of beam portions (42) in the radial direction,
the electric motor (30) comprising at least one fixing portion (51a to 59b) fixing the plurality of core members (37) to each other, **characterized in that** each of the plurality of beam portions (42) has a shape narrower than that of the inner yoke portion (41).

2. The electric motor (30) of claim 1, wherein
the at least one fixing portion (51a to 59b) fixes the outer yoke portions (43) of the plurality of core members (37) to each other.

3. The electric motor (30) of claim 1 or 2, wherein
the outer yoke portion (43) includes a plurality of arc portions (62) each having an outer periphery forming part of a circle, and a core cut portion (61) positioned between the plurality of arc portions (62) and having an outer shape formed by cutting out the circle, and
the at least one fixing portion (51a to 59b) fixes the plurality of arc portions (62) of the plurality of core members (37) to each other.

4. The electric motor (30) of any one of claims 1 to 3, wherein
the at least one fixing portion (51a to 59b) is disposed such that the outer joint portion (45) is interposed between a center of the rotary shaft and the at least one fixing portion (51a to 59b).

5. The electric motor (30) of any one of claims 1 to 4, wherein
the at least one fixing portion (51a to 59b) fixes the inner yoke portions (41) of the plurality of core members (37) to each other.

6. The electric motor (30) of any one of claims 1 to 5, wherein
the at least one fixing portion (51a to 59b) is interposed between the center of the rotary shaft and the inner joint portion (44).

7. The electric motor (30) of any one of claims 1 to 6, wherein
the at least one fixing portion (51a to 59b) fixes the plurality of beam portions (42) to each other.

8. The electric motor (30) of any one of claims 1 to 7, wherein
the at least one fixing portion (51a to 59b) is disposed in the inner yoke portion (41) and the outer yoke portion (43), and
the at least one fixing portion (51a to 59b) disposed in the outer yoke portion (43) is greater in number than the at least one fixing portion (51a to 59b) disposed in the inner yoke portion (41).

9. The electric motor (30) of any one of claims 1 to 8, wherein
at the at least one fixing portion (51a to 59b), the plurality of core members (37) are fixed to each other by swaging.

10. The electric motor (30) of any one of claims 1 to 9, wherein
at the at least one fixing portion (51a to 59b), the plurality of core members (37) are fixed to each other by welding.

11. The electric motor (30) of any one of claims 1 to 10, wherein
at the at least one fixing portion (51a to 59b), the plurality of core members (37) are fixed to each other by bonding.

12. The electric motor (30) of any one of claims 1 to 11, wherein
the stator core (32) is an integral core, which is not divided in a direction perpendicular to the axial direction.

13. A compressor (10) comprising the electric motor (30) of claim 1.

14. A refrigeration apparatus (1) comprising the compressor of claim 13.

## Patentansprüche

1. Elektromotor (30) mit einem Rotor (40), der um eine Drehwelle drehbar ist, und einem Statorkern (32), der außerhalb des Rotors (40) angeordnet ist und eine Vielzahl von Kernelementen (37) aufweist, die in einer axialen Richtung gestapelt sind,
wobei die Vielzahl von Kernelementen (37) jeweils aufweist: einen ringförmigen inneren Jochabschnitt (41); einen Zahnabschnitt (35), der sich in einer radialen Richtung von dem inneren Jochabschnitt (41) nach innen erstreckt; einen ringförmigen äußeren Jochabschnitt (43), der außerhalb des inneren Jochabschnitts (41) in der radialen Richtung angeordnet ist; eine Vielzahl von Trägerabschnitten (42), die sich in einer Umfangsrichtung zwischen dem inneren Jochabschnitt (41) und dem äußeren Jochabschnitt (43) erstrecken; einen inneren Verbindungsabschnitt (44), der den inneren Jochabschnitt (41) und die Vielzahl von Trägerabschnitten (42) in der radialen Richtung verbindet; und einen äußeren Verbindungsabschnitt (45), der den äußeren Jochabschnitt (43) und die Vielzahl von Trägerabschnitten (42) in der radialen Richtung verbindet,
wobei der Elektromotor (30) mindestens einen Befestigungsabschnitt (51a bis 59b) aufweist, der die Vielzahl von Kernelementen (37) aneinander befestigt,
**dadurch gekennzeichnet, dass** jeder der Vielzahl von Trägerabschnitten (42) eine Form aufweist, die schmaler als die des inneren Jochabschnitts (41) ist.

2. Elektromotor (30) nach Anspruch 1, wobei
der mindestens eine Befestigungsabschnitt (51a bis 59b) die äußeren Jochabschnitte (43) der Vielzahl von Kernelementen (37) aneinander befestigt.

3. Elektromotor (30) nach Anspruch 1 oder 2, wobei
der äußere Jochabschnitt (43) eine Vielzahl von Bogenabschnitten (62), die jeweils einen äußeren Umfang aufweisen, der einen Teil eines Kreises bildet, und einen Kernschnittabschnitt (61) aufweist, der zwischen der Vielzahl von Bogenabschnitten (62) positioniert ist und eine äußere Form aufweist, die durch Ausschneiden des Kreises gebildet wird, und
der mindestens eine Befestigungsabschnitt (51a bis 59b) die Vielzahl von Bogenabschnitten (62) der Vielzahl von Kernelementen (37) aneinander befestigt.

4. Elektromotor (30) nach einem der Ansprüche 1 bis 3, wobei
der mindestens eine Befestigungsabschnitt (51a bis 59b) so angeordnet ist, dass der äußere Verbindungsabschnitt (45) zwischen einer Mitte der Drehwelle und dem mindestens einen Befestigungsabschnitt (51a bis 59b) angeordnet ist.

5. Elektromotor (30) nach einem der Ansprüche 1 bis 4, wobei
der mindestens eine Befestigungsabschnitt (51a bis 59b) die inneren Jochabschnitte (41) der Vielzahl von Kernelementen (37) aneinander befestigt.

6. Elektromotor (30) nach einem der Ansprüche 1 bis 5, wobei
der mindestens eine Befestigungsabschnitt (51a bis 59b) zwischen der Mitte der Drehwelle und dem inneren Verbindungsabschnitt (44) angeordnet ist.

7. Elektromotor (30) nach einem der Ansprüche 1 bis 6, wobei
der mindestens eine Befestigungsabschnitt (51a bis 59b) die Vielzahl von Trägerabschnitten (42) aneinander befestigt.

8. Elektromotor (30) nach einem der Ansprüche 1 bis 7, wobei
der mindestens eine Befestigungsabschnitt (51a bis 59b) in dem inneren Jochabschnitt (41) und dem äußeren Jochabschnitt (43) angeordnet ist, und
der mindestens eine Befestigungsabschnitt (51a bis 59b), der in dem äußeren Jochabschnitt (43) angeordnet ist, eine größere Anzahl aufweist als der mindestens eine Befestigungsabschnitt (51a bis 59b), der in dem inneren Jochabschnitt (41) angeordnet ist.

9. Elektromotor (30) nach einem der Ansprüche 1 bis 8, wobei
an dem mindestens einen Befestigungsabschnitt (51a bis 59b) die Vielzahl von Kernelementen (37) durch Gesenkschmieden aneinander befestigt sind.

10. Elektromotor (30) nach einem der Ansprüche 1 bis 9, wobei
an dem mindestens einen Befestigungsabschnitt (51a bis 59b) die Vielzahl von Kernelementen (37) durch Schweißen aneinander befestigt sind.

11. Elektromotor (30) nach einem der Ansprüche 1 bis 10, wobei
an dem mindestens einen Befestigungsabschnitt (51a bis 59b) die Vielzahl von Kernelementen (37) durch Bonden aneinander befestigt sind.

12. Elektromotor (30) nach einem der Ansprüche 1 bis 11, wobei
der Statorkern (32) ein integraler Kern ist, der in einer Richtung senkrecht zu der axialen Richtung nicht geteilt ist.

13. Verdichter (10), der den Elektromotor (30) nach Anspruch 1 aufweist.

14. Kühlvorrichtung (1), die den Verdichter nach Anspruch 13 aufweist.

## Revendications

1. Moteur électrique (30) comprenant un rotor (40) pivotant autour d'un arbre rotatif et un noyau de stator (32) disposé à l'extérieur du rotor (40) et comprenant une pluralité d'éléments de noyau (37) empilés dans une direction axiale,
la pluralité des éléments de noyau (37) comprenant chacun : une partie annulaire de culasse intérieure (41) ; une portion de dent (35) s'étendant vers l'intérieur dans le sens radial depuis la partie de culasse intérieure (41) ; une partie annulaire de culasse extérieure (43) disposée à l'extérieur de la partie de culasse intérieure (41) dans le sens radial ; une pluralité de portions de bras (42) s'étendant dans une direction circonférentielle entre la partie de culasse intérieure (41) et la partie de culasse extérieure (43) ; une partie de joint intérieur (44) reliant la partie de culasse intérieure (41) à la pluralité des parties de bras (42) dans le sens radial ; et une partie de joint extérieur (45) reliant la partie de culasse extérieure (43) à la pluralité des parties de bras (42) dans le sens radial,
le moteur électrique (30) comprenant au moins une partie de fixation (51a à 59b) fixant la pluralité d'éléments de noyau (37) les uns aux autres,
**caractérisé en ce que** la forme de chacune de la pluralité de parties de bras (42) est plus étroite que celle de la partie de culasse intérieure (41).

2. Moteur électrique (30) selon la revendication 1,
l'au moins une partie de fixation (51a à 59b) fixant les unes aux autres les parties de culasse extérieure (43) de la pluralité d'éléments de noyau (37).

3. Moteur électrique (30) selon la revendication 1 ou 2,
la partie de culasse extérieure (43) comprenant une pluralité de parties d'arc (62), chacune possédant un pourtour extérieur formant une partie d'un cercle, et une partie de coupe de noyau (61) positionnée entre la pluralité de parties d'arc (62), et dont la forme extérieure est formée en découpant le cercle, et
l'au moins une partie de fixation (51a à 59b) fixant les unes aux autres la pluralité de parties d'arc (62) de la pluralité d'éléments de noyau (37).

4. Moteur électrique (30) selon une quelconque des revendications 1 à 3,
l'au moins une partie de fixation (51a à 59b) étant disposée de manière à ce que la partie de joint extérieur (45) soit intercalée entre un centre de l'arbre rotatif et l'au moins une partie de fixation (51a à 59b).

5. Moteur électrique (30) selon une quelconque des revendications 1 à 4,
l'au moins une partie de fixation (51a à 59b) fixant les unes aux autres les parties de culasse intérieure (41) de la pluralité d'éléments de noyau (37).

6. Moteur électrique (30) selon une quelconque des revendications 1 à 5,
l'au moins une partie de fixation (51a à 59b) étant intercalée entre le centre de l'arbre rotatif et la partie du joint intérieur (44).

7. Moteur électrique (30) selon une quelconque des revendications 1 à 6,
l'au moins une partie de fixation (51a à 59b) fixant les unes aux autres la pluralité des parties de bras (42).

8. Moteur électrique (30) selon une quelconque des revendications 1 à 7,
l'au moins une partie de fixation (51a à 59b) étant disposée dans la partie de culasse intérieure (41) et la partie de culasse extérieure (43), et
l'au moins une partie de fixation (51a à 59b) disposée dans la partie de culasse extérieure (43) étant plus nombreuse que l'au moins une partie de fixation (51a à 59b) disposée dans la partie de culasse intérieure (41).

9. Moteur électrique (30) selon une quelconque des revendications 1 à 8,
à l'au moins une partie de fixation (51a à 59b), la pluralité d'éléments de noyau (37) étant fixés les uns aux autres par emboutissage.

10. Moteur électrique (30) selon une quelconque des revendications 1 à 9,
à l'au moins une partie de fixation (51a à 59b), la pluralité d'éléments de noyau (37) étant fixés les uns aux autres par soudage.

11. Moteur électrique (30) selon une quelconque des revendications 1 à 10,
à l'au moins une partie de fixation (51a à 59b), la pluralité d'éléments de noyau (37) étant fixés les uns aux autres par collage.

12. Moteur électrique (30) selon une quelconque des revendications 1 à 11,
le noyau de stator (32) étant un noyau intégral, qui n'est pas divisé dans une direction perpendiculaire au sens axial.

13. Compresseur (10) comprenant le moteur électrique (30) selon la revendication 1.

14. Appareil de réfrigération (1) comprenant le compresseur selon la revendication 13.
